## Europäisches Patentamt
## European Patent Office
## Office européen des brevets

(19)

(11) Numéro de publication : **0 191 698**
**B1**

(12)

# FASCICULE DE BREVET EUROPÉEN

(45) Date de publication du fascicule du brevet :
26.04.89

(51) Int. Cl.⁴ : **F 16 D 13/68**

(21) Numéro de dépôt : **86400261.3**

(22) Date de dépôt : **07.02.86**

(54) Disque de friction d'embrayage.

(30) Priorité : **08.02.85 FR 8501761**

(43) Date de publication de la demande : ‚
20.08.86 Bulletin 86/34

(45) Mention de la délivrance du brevet :
26.04.89 Bulletin 89/17

(84) Etats contractants désignés :
DE IT

(56) Documents cités :
FR--A-- 2 000 871
FR--A-- 2 171 835
FR--A-- 2 493 447
FR--A-- 2 494 795
FR--A-- 2 551 813
GB--A-- 2 123 926
US--A-- 2 291 405

(73) Titulaire : **VALEO**
**64 Avenue de la Grande Armée**
**F-75017 Paris (FR)**

(72) Inventeur : **Blond, Marcel**
**68 Rue des Oiseaux**
**F-77176 Savigny-le-Temple (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

On a décrit dans la demande de brevet français déposée le 14 Septembre 1983 sous le N° 83 14609 et publiée sous le N° 2 551 813 un disque de friction d'embrayage, notamment pour véhicule automobile, du genre comportant un support de garnitures de frottement et un moyeu, qui sont mobiles angulairement l'un par rapport à l'autre dans les limites d'un débattement angulaire déterminé, le support et le moyeu étant accouplés par deux dispositifs amortisseurs de torsion, d'action étagée, dont un, dit par simple commodité premier dispositif, formant en quelque sorte préamortisseur, car destiné à intervenir seul pour les faibles valeurs de couple, est plus faible que l'autre, dit par simple commodité deuxième dispositif, destiné, lui, à intervenir pour des valeurs plus ou moins élevées dudit couple, et constitue un bloc préassemblé avec le moyeu au sein de ce deuxième dispositif, chacun de ces deux dispositifs comportant un voile, deux rondelles solidaires l'une de l'autre et disposées axialement de part et d'autre du voile, et des moyens élastiques interposés circonférentiellement entre le voile et les rondelles, le premier dispositif étant admis à agir entre le moyeu et le deuxième dispositif, le voile de ce premier dispositif étant solidaire du moyeu tandis que ses rondelles sont attelées au deuxième dispositif, et le voile dudit deuxième dispositif étant monté avec un jeu angulaire sur le moyeu tandis que ses rondelles sont solidaires du support des garnitures de frottement.

Un tel disque de friction d'embrayage a avantageusement un encombrement axial relativement réduit, tout en relevant d'un montage avantageusement très simple.

Suivant l'une des formes de réalisation décrites dans cette demande de brevet français, l'une des rondelles du premier dispositif comporte, pour son attelage au deuxième dispositif, des saillies qui sont engagées dans des encoches du voile dudit deuxième dispositif.

En pratique, il s'agit de saillies en forme de cuvette, qui venues d'un seul tenant avec la rondelle qui les porte, résultent d'un emboutissage convenable de celle-ci.

Dans le US-A-4 603 767, qui a été déposée le 11 Septembre 1984 sur la base de la demande de brevet français précédente en revendiquant la priorité de celle-ci, il est cependant suggéré de réaliser ces saillies sous la forme de pions convenablement rapportés, par sertissage ou rivetage par exemple, sur la rondelle concernée.

A la différence de saillies réalisées par emboutissage, les saillies ainsi constituées de pions rapportés peuvent avantageusement être cylindriques, avec par exemple un contour transversal circulaire, ce qui, en fonctionnement, évite que, en raison d'un éventuel déplacement axial dû aux inévitables tolérances de fabrication et/ou de montage et à une usure possible des garnitures de frottement, il puisse se former, entre elles et les encoches dans lesquelles elles sont engagées, un jeu circonférentiel nuisible à leur efficacité et/ou à leur longévité.

Pour rapporter ainsi par sertissage ou rivetage des pions sur l'une des rondelles du premier dispositif, il faut en pratique prévoir dans celle-ci des perçages.

Or, pour des questions usuelles de standardisation, il est avantageux que les deux rondelles de ce premier dispositif soient identiques l'une à l'autre, ce qui conduit à prévoir des perçages dans l'une et l'autre de ces rondelles.

La Demanderesse s'est alors posé la question de savoir s'il n'était pas possible de tirer un quelconque parti des perçages que présenterait autrement sans objet l'une de ces rondelles.

Or, par ailleurs, il est prévu, de manière usuelle, dans le premier dispositif, des moyens de frottement, et ceux-ci comportent, de manière usuelle, au moins une rondelle de frottement, qui est interposée entre le voile de ce premier dispositif et l'une de ses rondelles, et dont il est nécessaire, pour qu'elle déploie ses effets lors du débattement angulaire entre ce voile et cette rondelle, qu'elle soit au contact d'un de ces organes tout en étant solidarisée en rotation à l'autre de ceux-ci.

Dans la FR-A-2 551 813 aussi bien que dans le US-A-4 603 767 qui lui correspond, la rondelle de frottement en cause est au contact de la rondelle à laquelle elle est associée, et c'est donc au voile qu'elle est solidarisée en rotation.

Pour ce faire, elle présente axialement, en saillie, de place en place, des tétons, et ceux-ci sont chacun individuellement engagés dans des évidements prévus à cet effet dans le voile.

Bien qu'une telle disposition donne satisfaction, elle présente l'inconvénient de conduire inévitablement à un certain affaiblissement de la résistance mécanique du voile, qu'il faut dès lors établir en conséquence.

La présente invention a d'une manière générale pour objet une disposition, qui, déjà connue en elle-même par la demande de brevet français déposée le 25 Novembre 1980 sous le N° 80 24955 et publiée sous le N° 2 494 795, permet au contraire de ménager avantageusement ce voile.

De manière plus précise, elle a pour objet un disque de friction du genre comportant un support de garnitures de frottement et un moyeu, qui sont mobiles angulairement l'un par rapport à l'autre dans les limites d'un débattement angulaire déterminé, le support et le moyeu étant accouplés par deux dispositifs amortisseurs de torsion, d'action étagée, dont l'un, dit premier dispositif, est plus faible que l'autre, dit deuxième dispositif, et constitue un bloc préassemblé avec le moyeu au sein de ce deuxième dispositif, chacun de ces deux dispositifs comportant un voile, deux rondelles solidaires l'une de l'autre et disposées axialement de part et d'autre du voile

et des moyens élastiques interposés circonférentiellement entre le voile et les rondelles, le premier dispositif étant admis à agir entre le moyeu et le deuxième dispositif, le voile du premier dispositif étant solidaire du moyeu tandis que ses rondelles sont attelées au deuxième dispositif, et le voile du deuxième dispositif étant monté avec un jeu angulaire sur le moyeu tandis que ses rondelles sont solidaires du support des garnitures de frottement, ce disque de friction étant, d'une manière générale, caractérisé en ce que, en combinaison, l'une des rondelles du premier dispositif comporte des saillies, qui, pour l'attelage des rondelles dudit premier dispositif au deuxième dispositif, sont engagées dans des encoches du voile dudit deuxième dispositif, lesdites saillies sont constituées par des pions, qui, distincts de ladite rondelle du premier dispositif, sont convenablement rapportés sur celle-ci, à la faveur de perçages prévus à cet effet dans cette rondelle, le premier dispositif comporte, entre son voile et l'autre de ses rondelles, une rondelle de frottement, lesdites rondelles dudit premier dispositif sont identiques l'une à l'autre, et il est tiré profit des perçages que présente ainsi elle aussi ladite autre rondelle de celui-ci pour solidariser en rotation avec elle ladite rondelle de frottement, cette rondelle de frottement présentant axialement en saillie à cet effet des tétons qui sont chacun individuellement engagés dans lesdits perçages de ladite autre rondelle.

Ainsi aucun évidement n'est à prévoir dans le voile du premier dispositif pour y solidariser en rotation une quelconque rondelle de frottement.

Il est à souligner que la disposition permettant l'obtention de ce résultat ne peut normalement pas venir à l'esprit de l'homme de l'art ayant simultanément connaissance des documents FR-A-2 494 795 et FR-A-2 551 813 mentionnées ci-dessus, puisque dans la première les perçages prévus dans les rondelles y sont spécifiquement ménagés pour permettre de solidariser en rotation à l'une d'entre elles une rondelle de frottement, alors que, dans la deuxième, il est d'autant moins question d'une telle solidarisation en rotation que ces rondelles ne comportent pas de perçages mais au contraire des saillies en forme d'emboutis plus ou moins tronconiques ne pouvant en aucune façon se prêter à un engagement convenable des tétons que présente la rondelle de frottement, et que, dans le US-A-4 603 767 également mentionnée ci-dessus, il n'est toujours pas question de solidariser en rotation cette rondelle de frottement à l'une des rondelles, mais seulement de rapporter des pions sur l'une de celles-ci aux lieu et place des saillies en forme d'emboutis précédentes.

Les caractéristiques et avantages de l'invention ressortiront de la description qui va suivre, à titre d'exemple, en référence aux dessins schématiques annexés sur lesquels :

la figure 1 est, avec un arrachement, une vue partielle en élévation du disque de friction d'embrayage suivant l'invention, suivant la flèche I de la figure 2 ;

la figure 2 en est une vue en coupe axiale, suivant la ligne brisée II-II de la figure 1 ;

les figures 3, 4 en sont des vues partielles en plan-coupe, suivant respectivement les flèches III, IV de la figure 2 ;

la figure 5 est, à échelle supérieure, et avec un arrachement, une vue en élévation du premier dispositif amortisseur de torsion que comporte ce disque de friction d'embrayage, représenté isolément ;

la figure 6 est une vue en coupe axiale de ce premier dispositif amortisseur de torsion, suivant la ligne VI-VI de la figure 5 ;

la figure 7 en est une autre vue, partielle, en coupe axiale, suivant la ligne VII-VII de la figure 5.

Sur ces figures, on reconnaît un disque de friction d'embrayage du type de celui décrit dans la FR-A-2 551 813 et dans le US-A-4 603 767 revendiquant sa priorité.

Globalement, ce disque de friction d'embrayage, qui est en pratique destiné à l'équipement d'un véhicule automobile, comporte un support 10, pour des garnitures de frottement 11, et un moyeu 12 ; par ses garnitures de frottement 11 il est destiné à être serré entre deux plateaux d'embrayage, solidaires en rotation d'un premier arbre, en pratique l'arbre moteur du véhicule, tandis que, par son moyeu 12, il est destiné à être calé en rotation sur un deuxième arbre, en pratique l'arbre d'entrée de la boîte de vitesses de celui-ci.

Dans la forme de réalisation représentée, le support 10 des garnitures de frottement 11 est constitué d'une pluralité de pales.

Quoi qu'il en soit, ce support 10 et le moyeu 12 sont mobiles angulairement l'un par rapport à l'autre, dans les limites d'un débattement angulaire déterminé, et, pour ce faire, ils sont accouplés l'un à l'autre par deux dispositifs amortisseurs de torsion, d'action étagée, à savoir, un premier dispositif A, qui, plus faible que l'autre, est destiné à intervenir seul lorsque le couple à transmettre est très faible ou nul, et un deuxième dispositif B, qui, d'action plus forte, est destiné à intervenir lorsque ce couple est plus ou moins élevé.

Le premier dispositif A constitue un bloc préassemblé avec le moyeu 12 au sein du deuxième dispositif B.

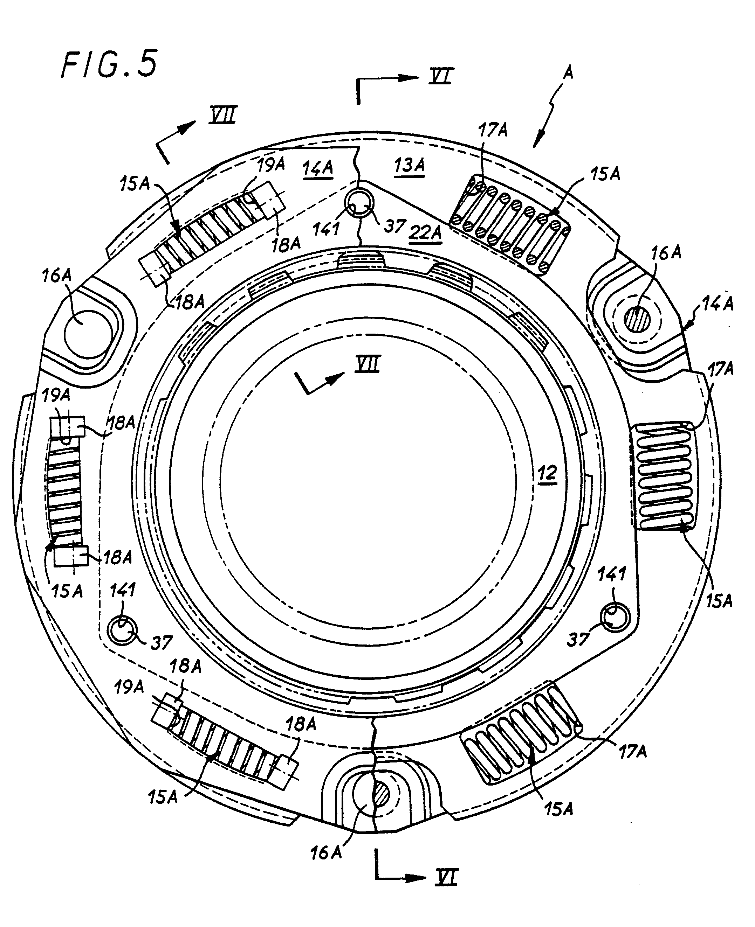

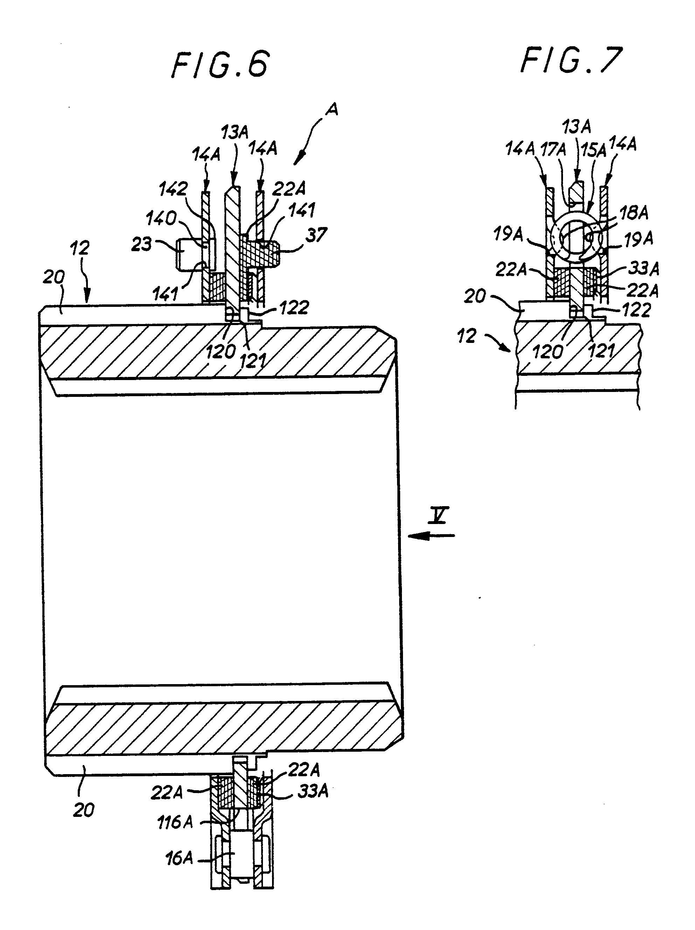

Ainsi qu'il est mieux visible sur les figures 5, 6, il comporte un voile 13A, qui, suivant des modalités décrites plus en détail ci-après, est solidaire, au moins circonférentiellement, c'est-à-dire en rotation, du moyeu 12, deux rondelles 14A, qui, libres par rapport au moyeu 12, sont chacune respectivement disposées axialement de part et d'autre du voile 13A tout en étant solidaires l'une de l'autre, des moyens élastiques 15A, qui sont interposés circonférentiellement entre le voile 13A et les rondelles 14A, et des moyens de frottement, qui, suivant des modalités également détaillées ultérieurement, sont interposés axialement entre ce voile 13A et ces rondelles 14A.

Le voile 13A et les rondelles 14A s'étendent globalement dans la zone médiane du moyeu 12, autour de celui-ci.

A sa périphérie externe, le moyeu 12 présente axialement en saillie sur une partie de sa longueur des cannelures 20, qui, au droit du voile 13A, au-delà d'un épaulement transversal 120, sont radialement de hauteur réduite, et, à sa périphérie interne, le voile 13A présente lui-même, de manière complémentaire, des cannelures 121 par lesquelles il est en prise, sans jeu, avec la portion de hauteur radiale réduite des précédentes.

Dans la forme de réalisation représentée, le voile 13A est ainsi solidaire du moyeu 12 non seulement circonférentiellement, mais encore axialement.

En effet, dans cette forme de réalisation, il est en appui axial, par l'une de ses faces, sur l'épaulement transversal 120 des cannelures 20 du moyeu 12, et, sur l'autre de ses faces, un bourrelet 122 venu par sertissage de la portion de hauteur radiale réduite de ces cannelures 20 le maintient ainsi en appui axial contre ledit épaulement transversal 120 de celles-ci.

Dans la forme de réalisation représentée, les rondelles 14A sont solidarisées l'une à l'autre par des colonnettes axiales 16A, qui, traversant avec jeu des échancrures 116A prévues à cet effet à la périphérie du voile 13A, sont assujetties par rivetage auxdites rondelles 14A à leurs extrémités.

Dans la forme de réalisation représentée, les moyens élastiques 15A consistent en une série circulaire d'un ou plusieurs jeux de ressorts, ici un seul, qui, tous allongés sensiblement tangentiellement à une même circonférence de l'ensemble, sont chacun individuellement logés dans des fenêtres 17A du voile 13A, entre des emboutis 18A des rondelles 14A formant eux-mêmes les bords d'extrémité circonférentielle de fenêtres 19A ménagées dans ces rondelles 14A.

Quant aux moyens de frottement associés, enfin, ils comportent, dans la forme de réalisation représentée, deux rondelles de frottement 22A, disposées chacune respectivement de part et d'autre du voile 13A, entre celui-ci et la rondelle 14A correspondante, et ils sont tarés élastiquement, une rondelle élastique 33A étant à cet effet elle-même axialement interposée entre une telle rondelle de frottement 22A et la rondelle 14A correspondante.

Il s'agit, par exemple, tel que représenté, d'une rondelle ondulée du type de celle vendue sous la désignation commerciale « ONDUFLEX ».

En pratique, cette rondelle ondulée 33A est ainsi prévue du côté du voile 13A axialement opposé au support 10 des garnitures de frottement 11.

Le deuxième dispositif amortisseur de torsion B comporte lui-même un voile 13B, ici en forme de L, qui, présentant à sa périphérie interne, des cannelures 20', est monté, par celles-ci, mais avec un jeu angulaire, sur les cannelures 20 du moyeu 12, deux rondelles 14B, qui, disposées chacune respectivement de part et d'autre du voile 13B, en encadrant le premier dispositif A, sont solidaires l'une de l'autre et sont solidaires du support 10 des garnitures de frottement 11, des moyens élastiques 15B, qui sont interposés circonférentiellement entre le voile 13B et les rondelles 14B, et des moyens de frottement, qui agissent axialement entre ce voile 13B et ces rondelles 14B.

Dans la forme de réalisation représentée, l'une des rondelles 14B, qui est celle disposée axialement du côté du voile 13B opposé au premier dispositif A, et qui est également celle dont est solidaire, par des rivets 21, le support 10 des garnitures de frottement 11, forme, d'un seul tenant, à sa périphérie externe, au-delà de la périphérie externe du voile 13B associé, une couronne 124, qui s'étend globalement axialement, avec un redan 125 dans sa zone médiane, et par laquelle elle est solidarisée à l'autre.

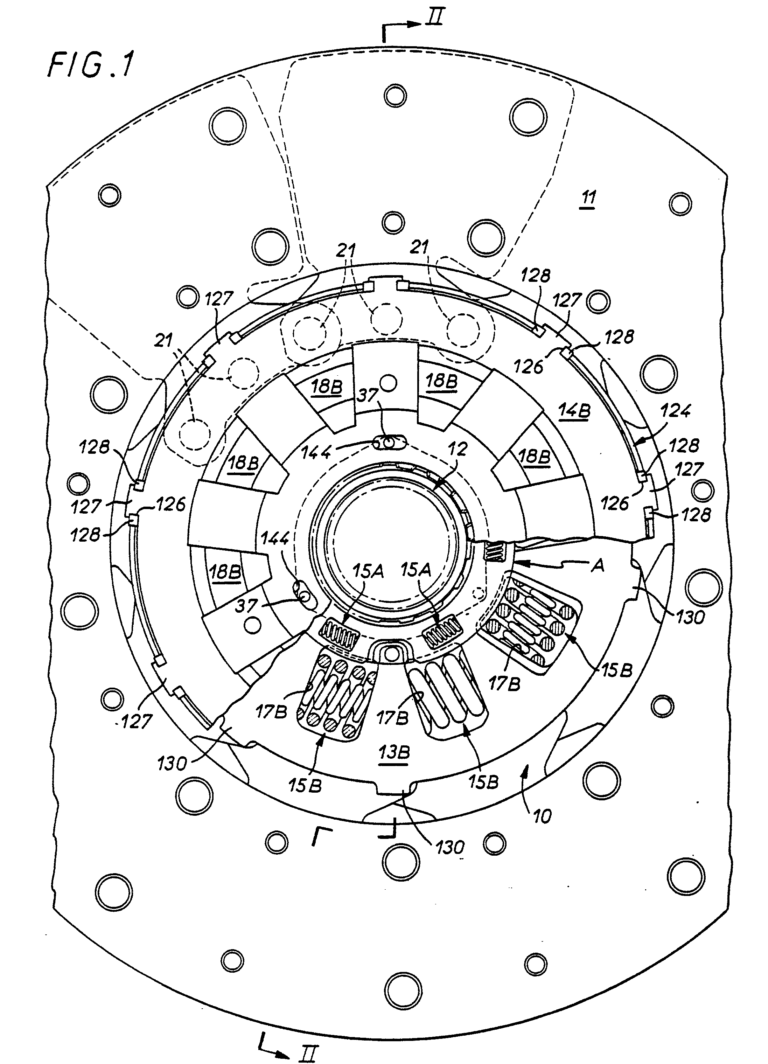

Cette couronne 124 présente par exemple de place en place à cet effet, à son extrémité, des échancrures 126, formant mortaises, et, en correspondance, l'autre rondelle 14B comporte, radialement en saillie de place en place à sa périphérie externe, des tenons 127, et lesdits tenons 127, qui sont circonférentiellement complémentaires desdites échancrures 126, sont chacun individuellement engagés dans ces échancrures 126, en y étant maintenus par sertissage des bords correspondants de celles-ci, tel que représenté en 128 sur les figures 1, 2 et 4.

De même, dans la forme de réalisation représentée, le voile 13B présente, de place en place, radialement en saillie à sa périphérie externe, des tenons 130, et ceux-ci sont chacun individuellement engagés, avec un jeu angulaire, dans des fenêtres 131 prévues à cet effet dans la couronne 124 de la rondelle 14B, dans la portion de cette couronne 124 comportant un redan 125.

Comme précédemment, les moyens élastiques 15B consistent, dans la forme de réalisation représentée, en une ou plusieurs séries circulaires d'un ou plusieurs jeux de ressorts, qui, tous allongés globalement tangentiellement à une même circonférence de l'ensemble, sont chacun individuellement disposés dans des fenêtres 17B du voile 13B, entre des emboutis 18B des rondelles 14B.

Dans la forme de réalisation représentée, deux séries de tels ressorts sont prévues, et, pour une action étagée de ceux-ci, certains sont engagés sans jeu angulaire dans les fenêtres 17B correspondantes du voile 13B pour la configuration de repos de l'ensemble, tandis que, pour cette configuration de repos, d'autres sont au contraire engagés avec un jeu angulaire à l'une et à l'autre de leurs extrémités dans les fenêtres 17B correspondantes de ce voile 13B.

En outre, dans la forme de réalisation représentée, pour chaque fenêtre 17B du voile 13B deux ressorts coaxiaux sont mis en œuvre.

Comme précédemment également, les moyens de frottement associés comportent deux rondelles de frottement 22B.

L'une d'elles est disposée au contact du voile 13B, du côté de celui-ci axialement opposé au premier dispositif A.

Par des pattes 36 qui s'étendent axialement en saillie de place en place à sa périphérie externe, elle est solidaire en rotation de la rondelle 14B portant le support 10 des garnitures de frottement 11, chacune desdites pattes 36 traversant pour ce faire un perçage 136 prévu à cet effet dans cette rondelle 14B.

L'autre rondelle de frottement 22B est au contact de cette rondelle 14B, sur la face de celle-ci axialement opposée au voile 13B.

Comme précédemment, enfin, les moyens de frottement ainsi constitués sont tarés élastiquement par une rondelle ondulée 33B, du type de celle vendue sous la désignation commerciale « ONDUFLEX ».

Dans la forme de réalisation représentée, cette rondelle ondulée 33B est disposée axialement entre celle des rondelles de frottement 22B qui est munie de pattes 36 et la rondelle 14B concernée, et le maintien axial de l'ensemble est assuré par un anneau élastique 30, qui, en prise avec une gorge prévue à cet effet sur la partie axiale du voile 13B, contribute l'autre rondelle de frottement 22B, sur la face de celle-ci opposée à la précédente.

Les rondelles 14A du premier dispositif A sont attelées en rotation au deuxième dispositif B, et, plus précisément, au voile 13B de celui-ci.

Pour son attelage en rotation au deuxième dispositif B, l'une des rondelles 14A du premier dispositif A, et il s'agit en pratique de celle axialement la plus proche du voile 13B du deuxième dispositif B comporte, circulairement, de place en place, sur celle de ses faces tournée vers ledit voile 13B, des saillies 23 qui sont chacune individuellement engagées dans des encoches 24 de ce voile 13B.

En pratique, trois saillies 23 sont ainsi prévues, à 120° les unes des autres, et elles sont constituées par des pions, qui, distincts de la rondelle 14A qui les porte, sont convenablement rapportés sur celle-ci.

Dans la forme de réalisation représentée, il s'agit de pions cylindriques de contour circulaire, c'est-à-dire de pions dont la paroi latérale est cylindrique et a transversalement une section circulaire.

Pour en faciliter l'engagement dans les encoches 24 du voile 13B du deuxième dispositif B, les saillies 23 ainsi constituées sont chanfreinées en tronc de cône à leur extrémité libre.

Malgré le chanfrein correspondant, et ainsi qu'on le notera, les saillies 23 ainsi réalisées sont avantageusement axialement relativement courtes, lesdites saillies 23 présentant juste la longueur axiale nécessaire pour ne pas échapper aux encoches 24 du voile 13B du deuxième dispositif B.

Corollairement, ces encoches 24 ont avantageusement une profondeur avantageusement relativement faible, ce qui ménage le voile 13B concerné.

Dans la forme de réalisation représentée, les saillies 23 sont rapportées par rivetage sur la rondelle 14A qui les porte, chacune d'elles présentant à cet effet une queue de section réduite 140, par laquelle elle est engagée sans jeu dans un perçage de contour complémentaire 141 prévu à cet effet dans ladite rondelle 14A, et qui, au-delà de cette dernière, est rivetée en 142 au contact de celle-ci, figure 6.

La rondelle 14A concernée présente donc trois perçages 141, et il en est de même pour l'autre rondelle 14A, lesdites rondelles 14A étant en pratique identiques l'une à l'autre pour des commodités évidentes de fabrication.

Suivant l'invention, il est tiré profit des perçages 141 que présente ainsi l'autre rondelle 14A pour assurer la solidarisation en rotation à cette dernière de la rondelle de frottement 22A axialement disposée entre elle et le voile 13A associé.

Pour ce faire, cette rondelle de frottement 22A présente axialement en saillie, de place en place, en correspondance avec les perçages 141 de la rondelle 14A concernée, des tétons 37 chacun individuellement engagés, à frottement doux, dans lesdits perçages 141.

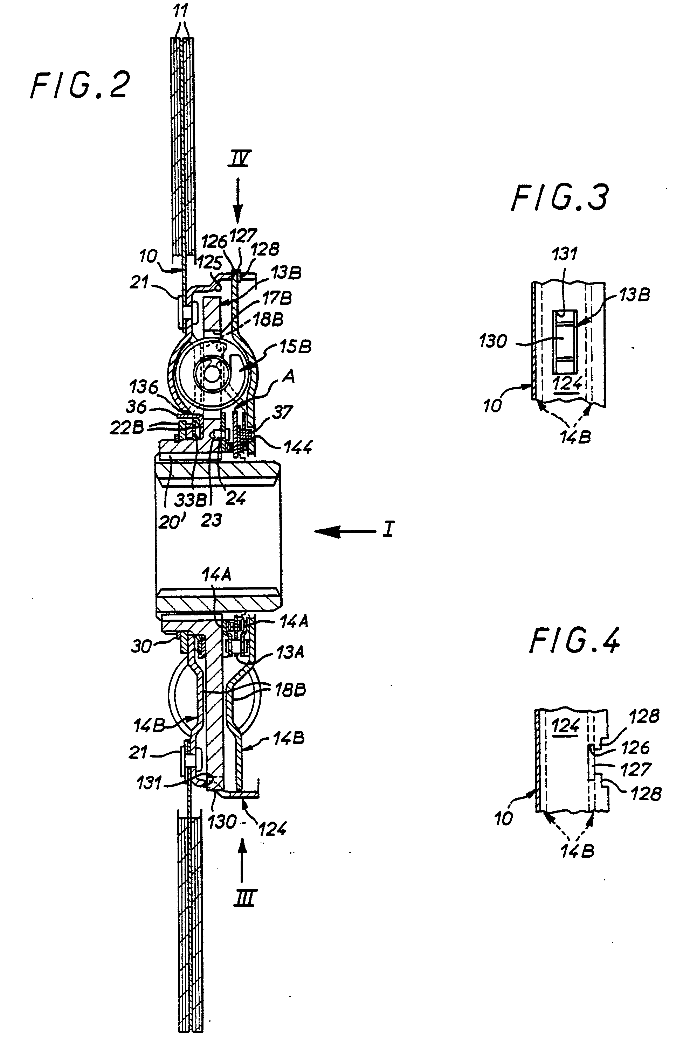

Pour éviter toute interférence entre elle et ces tétons 37, celle des rondelles 14B du deuxième dispositif B qui est proche présente elle-même, en correspondance avec lesdits tétons 37, des perçages 144, qui sont allongés circulairement en boutonnière, figures 1 et 2, et dans lesquels, chacun individuellement, sont engagés lesdits tétons 37.

Ainsi donc, dans la forme de réalisation représentée, celle des rondelles 14A du premier dispositif A avec laquelle est solidarisée en rotation une rondelle de frottement 22A est celle axialement la plus éloignée du voile 13B du deuxième dispositif B.

Si désiré, les tétons 37 correspondants peuvent servir au centrage de la rondelle élastique ondulée 33A associée, et, de même, les têtes de rivetage 142 des saillies 23 peuvent servir au centrage de la rondelle de frottement 22A correspondante.

Pour le montage du disque de friction d'embrayage ainsi constitué, il est d'abord procédé au préassemblage d'un ensemble formé du moyeu 12 et du premier dispositif A, et il est procédé ensuite à l'assemblage du deuxième dispositif B, en enfermant au sein de celui-ci le premier dispositif A précédent.

En service, lorsque le couple à transmettre est faible, seul intervient le premier dispositif A, puis, les moyens élastiques 15A correspondants étant saturés, le deuxième dispositif B intervient à son tour lorsque ce couple est plus fort.

Dans l'un et l'autre cas, le débattement angulaire correspondant, qui s'établit d'abord entre les rondelles 14A du premier dispositif A et le voile 13A de celui-ci, puis entre les rondelles 14B du deuxième dispositif B et le voile 13B de ce dernier, est limité par des moyens de butée.

Il peut s'agir par exemple des moyens élastiques 15A, 15B correspondants, l'un au moins des ressorts qui les constituent venant alors à spires jointives.

Par ailleurs, et ainsi qu'on l'aura compris, les encoches 24 du voile 13B du deuxième dispositif B dans lesquelles sont engagées les saillies 23 portées par la rondelle 14A correspondante du premier dispositif A sont cylindriques, avec un contour circulaire, à l'image desdites saillies 23.

## Revendications

1. Disque de friction d'embrayage, du genre comportant un support (10) de garnitures de frottement (11) et un moyeu (12), qui sont mobiles angulairement l'un par rapport à l'autre dans les limites d'un débattement angulaire déterminé, le support (10) et le moyeu (12) étant accouplés par deux dispositifs amortisseurs de torsion, d'action étagée, dont l'un (A), dit premier dispositif, est plus faible que l'autre (B), dit deuxième dispositif, et constitue un bloc préassemblé avec le moyeu (12) au sein de ce deuxième dispositif (B), chacun de ces deux dispositifs comportant un voile (13A, 13B), deux rondelles (14A-14A, 14B-14B) solidaires l'une de l'autre et disposées axialement de part et d'autre du voile (13A, 13B) et des moyens élastiques (15A, 15B) interposés circonférentiellement entre le voile et les rondelles, le premier dispositif (A) étant admis à agir entre le moyeu (12) et le deuxième dispositif (B), le voile (13A) du premier dispositif (A) étant solidaire du moyeu (12) tandis que ses rondelles (14A) sont attelées au deuxième dispositif (B), et le voile (13B) du deuxième dispositif (B) étant monté avec un jeu angulaire sur le moyeu (12) tandis que ses rondelles (14B) sont solidaires du support (10) des garnitures de frottement (11), disque de friction d'embrayage caractérisé en ce que, en combinaison, l'une des rondelles (14A) du premier dispositif (A) comporte des saillies (23), qui, pour l'attelage des rondelles (14A) dudit premier dispositif (A) au deuxième dispositif (B), sont engagées dans des encoches (24) du voile (13B) dudit deuxième dispositif (B), lesdites saillies (23) sont constituées par des pions, qui, distincts de ladite rondelle (14A) du premier dispositif (A), sont convenablement rapportés sur celle-ci à la faveur de perçages (141) prévus à cet effet dans cette rondelle (14A), le premier dispositif (A) comporte, entre son voile (13A) et l'autre de ses rondelles (14A), une rondelle de frottement (22A), lesdites rondelles (14A) dudit premier dispositif (A) sont identiques l'une à l'autre, et il est tiré profit des perçages (141) que présente ainsi elle aussi ladite autre rondelle (14A) de celui-ci pour solidariser en rotation avec elle ladite rondelle de frottement (22A), cette rondelle de frottement (22A) présentant axialement en saillie à cet effet des tétons (37) qui sont chacun individuellement engagés dans lesdits perçages (141) de ladite autre rondelle (14A).

2. Disque de friction d'embrayage suivant la revendication 1, caractérisé en ce que celle des rondelles (14A) du premier dispositif (A) avec laquelle est solidarisée en rotation la rondelle de frottement (22A) est celle axialement la plus éloignée du voile (13B) du deuxième dispositif (B).

3. Disque de friction d'embrayage suivant la revendication 2, caractérisé en ce que celle des rondelles (14B) du deuxième dispositif qui est proche de la rondelle de frottement (22A) présente, en correspondance avec les tétons (37) de celle-ci, des perçages (144), qui sont allongés en boutonnière, et dans lesquels, chacun individuellement, sont engagés lesdits tétons (37).

4. Disque de friction d'embrayage suivant l'une quelconque des revendications 1 à 3, caractérisé en ce que, une rondelle élastique (33A) étant axialement interposée entre la rondelle de frottement (22A) et la rondelle (14A) correspondante du premier dispositif (A), les tétons (37) de ladite rondelle de frottement (22A) servent au centrage de ladite rondelle élastique (33A).

5. Disque de friction d'embrayage suivant l'une quelconque des revendications 1 à 4, caractérisé en ce que, une rondelle de frottement (22A) étant également prévue de l'autre côté du voile (13A) du premier dispositif (A) entre ce voile (13A) et la rondelle (14A) correspondante, les têtes de rivetage (142) des saillies (23) que comporte cette rondelle (14A) servent au centrage de cette rondelle de frottement (22A).

## Claims

1. A clutch friction plate of the kind comprising a support (10) for friction facings (11) and a hub (12) which are angularly movable relative to each other within determined limits of relative angular displacement, the support (10) and the hub (12) being coupled by two torsional damper devices the action of which is staggered and of which one (A) hereinafter referred to as the first device, is weaker than the other (B), referred to hereinafter as the second device, and constitutes an assembly pre-assembled with the hub (12) within the second device (B), each of these two devices comprising a flange (13A, 13B), two washers (14A-14A, 14B-14B) fastened to each other and disposed axially one on each side of the flange (13A, 13B), and elastic means (15A, 15B) disposed circumferentially between the flange and the washers, the first device (A) being adapted to operate between the hub (12) and the second device (B), the flange (13A) of the first device (A) being rigidly attached to the hub (12) whereas its washers (14A) are coupled to the second device, and the flange (13B) of the second device (B) being mounted with angular play on the hub (12) whereas its washers (14B) are rigidly attached to the support (10) of the friction facings (11), this clutch friction disc being characterized in that, in combination, one of the washers (14A) of the first device (A) comprises protrusions (23) which, for the purpose of coupling the washers (14A) of the said first device (A) to the second device (B), are engaged in indentations (24) in the flange (13B) of the said second device (B), the said protrusions (23) consist of pegs which are separate from the said washer (14A) of the first device (A) and are appropriately attached thereto by means of holes (141) provided for this purpose in this washer (14A), the first device (A) comprises between its flange (13A) and the other of its washers (14A) a friction ring (22A), the said washers (14A) of the said first device (A) are identical to each other, and use is made of the holes (141), which the said other washer (14A) of the device therefore also comprises, in order to fix the said friction ring (22A) to rotate with it, this friction ring (22A) comprising for this purpose axially projecting studs (37) each of which is individually engaged in one of the said holes (141) in the said other washer (14A).

2. A clutch friction plate according to Claim 1, characterized in that the washer (14A) of the first device (A) with which the friction ring (22A) is fixed to rotate is that axially further from the flange (13B) of the second device (B).

3. A clutch friction plate according to Claim 2, characterized in that the washer (14B) of the second device (B) which is near the friction ring (22A) comprises holes (141) which are elongated to form slots in corresponding relationship to the studs (37) of the friction ring, in which the said studs (37) are each individually engaged.

4. A clutch friction plate according to any one of Claims 1 to 3, characterized in that an elastic washer (33A) is axially disposed between the friction ring (22A) and the corresponding washer (14A) of the first device (A), the studs (37) of the said friction ring (22A) serving to centre the said elastic washer (33A).

5. A clutch friction plate according to any one of Claims 1 to 4, characterized in that a friction ring (22A) is also provided on the other side of the flange (13A) of the first device (A) between this flange (13A) and the corresponding washer (14A), and the rivet heads (142) of the protrusions (23) which this washer (14A) comprises serve to centre this friction ring (22A).

**Patentansprüche**

1. Kupplungsreibscheibe der Art, die einen Träger (10) für Reibbeläge (11) und eine Nabe (12) enthält, welche im Verhältnis zueinander winklig innerhalb der Grenzen eines bestimmten Winkelbereichs bewegt werden können, wobei Träger (10) und Nabe (12) durch zwei Drehschwingungsdämpfer miteinander verbunden sind, die stufenweise arbeiten, wovon der eine (A), die sogenannte erste Vorrichtung, schwächer ist als der andere (B), die sogenannte zweite Vorrichtung, und einen Block bildet, der mit der Nabe (12) im Innern dieser zweiten Vorrichtung (B) vormontiert ist, während jede dieser beiden Vorrichtungen eine Schale (13A, 13B), zwei fest miteinander verbundene und axial beiderseits der Schale (13A, 13B) angeordnete Scheiben (14A-14A, 14B-14B) sowie elastische Elemente (15A, 15B) enthält, die am Kreisumfang zwischen Schale und Scheiben eingefügt sind, wobei die erste Vorrichtung (A) zwischen der Nabe (12) und der zweiten Vorrichtung (B) wirksam werden kann und die Schale (13A) der ersten Vorrichtung (A) fest mit der Nabe (12) verbunden ist, während die Scheiben (14A) an der zweiten Vorrichtung (B) befestigt sind, und wobei die Schale (13B) der zweiten Vorrichtung (B) mit einem Winkelspiel an der Nabe (12) angebracht ist, während deren Scheiben (14B) fest mit dem Träger (10) für die Reibbeläge (11) verbunden sind, und die Kupplungsreibscheibe ist dadurch gekennzeichnet, daß in Kombination die eine der Scheiben (14A) der ersten Vorrichtung (A) Vorsprünge (23) aufweist, die zur Ankopplung der Scheiben (14A) der genannten ersten Vorrichtung (A) an der zweiten Vorrichtung (B) in Einschnitte (24) der Schale (13B) der genannten zweiten Vorrichtung (B) eingreifen, wobei die genannten Vorsprünge (23) aus Stiften bestehen, die von der genannten Scheibe (14A) der ersten Vorrichtung (A) verschieden sind und an dieser auf zweckmäßige Weise mit Hilfe von Bohrungen (141) befestigt sind, die zu diesem Zweck in dieser Scheibe (14A) vorgesehen sind, wobei die erste Vorrichtung (A) zwischen der Schale (13A) und der anderen Scheibe (14A) eine Reibscheibe (22A) enthält und die genannten Scheiben (14A) der genannten ersten Vorrichtung (A) identisch sind und die Bohrungen (141) genutzt werden, die die genannte andere Scheibe (14A) derselben ebenfalls aufweist, um eine drehbare feste Verbindung mit der genannten Reibscheibe (22A) zu bewirken, während diese Reibscheibe (22A) zu diesem Zweck, axial vorspringend, Zapfen (37) aufweist, die jeweils einzeln in die genannten Bohrungen (141) der genannten anderen Scheibe (14A) eingreifen.

2. Kupplungsreibscheibe gemäß Anspruch 1, dadurch gekennzeichnet, daß es sich bei derjenigen Scheibe (14A) der ersten Vorrichtung (A), mit der die Reibscheibe (22A) drehbar fest verbunden ist, um diejenige handelt, die axial am weitesten von der Schale (13B) der zweiten Vorrichtung (B) entfernt ist.

3. Kupplungsreibscheibe gemäß Anspruch 2, dadurch gekennzeichnet, daß diejenige der Scheiben (14B) der zweiten Vorrichtung, die in der Nähe der Reibscheibe (22A) angeordnet ist, entsprechend deren Zapfen (37) Bohrungen (144) aufweist, die in Form länglicher Aussparungen verlängert sind und worin jeweils einzeln die genannten Zapfen (37) eingreifen.

4. Kupplungsreibscheibe gemäß einem der Ansprüche 1 bis 3, dadurch gekennzeichnet, daß eine Federscheibe (33A) axial zwischen der Reibscheibe (22A) und der entsprechenden Scheibe (14A) der ersten Vorrichtung (A) eingefügt ist, wobei die Zapfen (37) der genannten Reibscheibe (22A) zum Zentrieren der genannten Federscheibe (33A) dienen.

5. Kupplungsreibscheibe gemäß einem der Ansprüche 1 bis 4, dadurch gekennzeichnet, daß auf der anderen Seite der Schale (13A) der ersten Vorrichtung (A) zwischen dieser Schale (13A) und der entsprechenden Scheibe (14A) auch eine Reibscheibe (22A) vorgesehen ist, wobei die Nietköpfe (142) der Vorsprünge (23), die diese Scheibe (14A) aufweist, zum Zentrieren dieser Reibscheibe (22A) dienen.

FIG.1

FIG.2

FIG.3

FIG.4

11

IV

10
21
126 127
125
128
13B
17B
18B
15B
A
136
36
22B
37
144
33B 24
20' 23
I
14A
14A
30
13A
18B
14B
21
14B
131
130 124
III

131
130
10
13B
124
14B

124
128
126
127
128
10
14B

2

FIG.5

# FIG.6

# FIG.7